# EUROPEAN PATENT SPECIFICATION

(11) **EP 0 202 055 B1**
(45) Date of publication and mention of the grant of the patent: **20.01.1993**
(21) Application number: 86303325.4
(22) Date of filing: 01.05.1986
(51) Int. Cl.: G02B 6/38

(54) **Optical fibre connector**
Verbinder für optische Faser
Connecteur pour fibre optique

(30) Priority: 09.05.1985 JP 98600/85
(43) Date of publication of application: 20.11.1986
(73) Proprietor: SUMITOMO ELECTRIC INDUSTRIES LIMITED, Osaka-shi, Osaka 541 (JP)
(72) Inventor: Yoshida, Noriyuki, Konohana-ku Osaka (JP); Takahashi, Kenichi C/o Osaka Works Sumitomo Elec., Konohana-ku Osaka (JP)
(74) Representative: Evans, David Charles

(56) References cited:
- EP-A- 0 021 871
- CA-A- 1 186 537
- US-A- 4 087 155
- US-A- 4 178 068
- US-A- 4 327 964
- PATENT ABSTRACTS OF JAPAN, vol. 1, no. 72, 13th July 1977, page 779 E77; & JP-A- 52 9450
- OPTICAL COMMUNICATION ECOC '84, 10th EUROPEAN CONFERENCE ON OPTICAL COMMUNICATION, Stuttgart, 3rd - 6th September 1984, pages 182-183, Nort-Holland, Amsterdam, NL; J. ABERSON et al.: "Multimode mechanical splices"

## Description

This invention relates to an improvement of an optical fiber connector.

Optical fiber connectors are used either to connect an optical fibre with another optical fiber or to connect an optical fibre with an opto-electrical device e.g. light-emitting device or photo-detecting device.

In this invention, optical fibres signify such fibers through which infrared light e.g. the light of a CO₂ laser can propagate with low loss.

Thus the optical fibre of this invention does not mean the conventional fibers e.g. fused silica glass fibres, plastics fibres or multi-component glass fibres which transmit visible light (wavelength 0.4 - 0.75µm) or near infrared light (wavelength 0.75 - 2.5µm).

These conventional optical fibres are generally used to transmit optical digital or analog signals.
The optical fibres are long, light and fine.
They have a core-cladding structure. The core is a central portion in which a light beam transmits. The cladding is a peripheral portion which encloses the core portion. The refractive index of the core is slightly larger than that of the cladding. Although both the core and the cladding are transparent to the transmitting light, the light transmits mainly through the core because of the difference of the refractive index.

On the contrary the optical fibers in this invention transmit infrared light power instead of signals. Especially the optical fibers can be used to transmit the light from CO₂ lasers or radiation thermometers. Radiation thermometer detects temperature of an object by measuring the power of infrared light emitted by the object. The power spectrum of the emitted light depends on the temperature of the object.

CO₂ lasers can emit strong infrared light beams with high efficiency. The wavelength of the CO₂ laser light is 10.6µm in a usual case.

Fused silica fibre or plastic fibre cannot transmit CO₂ laser light. Various kinds of optical fibres for CO₂ laser light transmission have been proposed. Some are glassy fibres. Others are crystalline fibres. Glass fibres are made of chalcogenide glass e.g. As-S glass or As-Se glass, or monoelement glass e.g. Ge glass. However glassy fibres for CO₂ laser light are generally very difficult to manufacture.

More recent fibres are crystalline fibres. The following crystalline fibres are known now,
(1) Thallium Halides
   TII, TIBr, TICI and mixture crystals of them
(2) Silber Halides
   AgI, AgBr, AgCI and mixtures of them
(3) Alkali Halides
   CsI, CsBr, etc.

The optical fibres for CO₂ laser light transmission are generally short, and thick.
Most of the optical fibres do not have a core-clad structure, that is, they lack a clad portion in general.

The characteristics required for optical fibre connectors are a coupling and decoupling facility, a small connection loss, and easy handling.

The connection loss mainly originates from incorrect locations of optical fibres in optical fibre connectors. Due to the incorrect locations when two optical fibre connectors are coupled, the centres of optical fibres are displaced relative to each other.
Because the diameter of the fibre cores is small, even a slight displacement of the fibre centres causes a great connection loss.

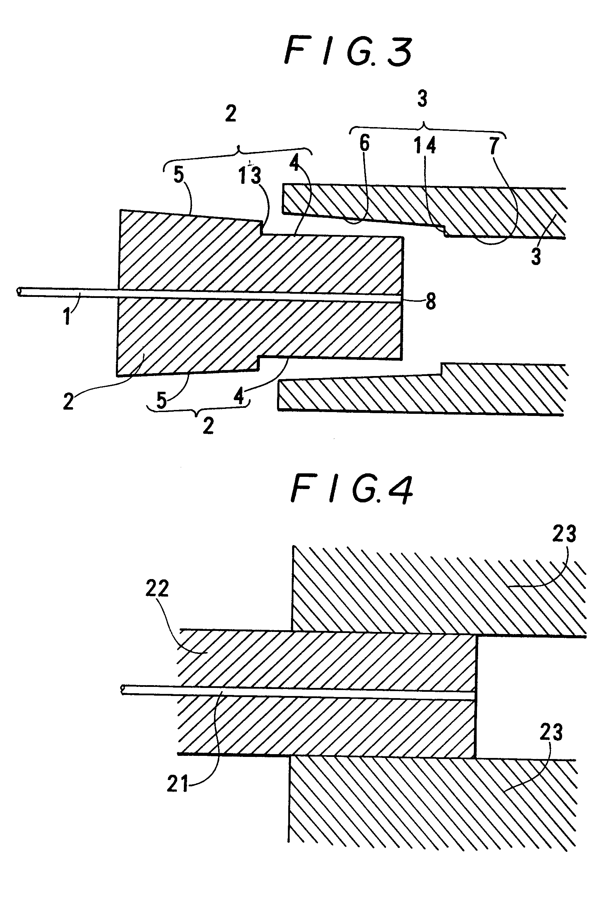

Fig. 4 shows a sectional view of a conventional optical fibre connector for CO₂ laser light.

At a front end of an optical fibre (21), a cylindrical sleeve (22) is fitted coaxially.
The outer surface of the sleeve (22) has been finished to a cylindrical surface with high accuracy.
The sleeve (22) is inserted and fixed in a receptacle (23) having an inner cylindrical surface finished with high accuracy.

The longer the contact length is, the more accurate the central axis of the sleeve (22) coincides with the central axis of the receptacle (23).

The narrower the clearance between the outer cylindrical surface of the sleeve (22) and the inner cylindrical surface of the receptacle (23) is, the smaller the vibration of the sleeve (22) in the direction vertical orthogonal to the axial direction becomes.

However due to the restriction of accuracy of finishing, the clearance between the outer cylindrical surface and the inner cylindrical surface cannot be eliminated completely. Furthermore probable incorrectness of cylindrical surfaces of the receptacle and the sleeve does not allow the clearance therebetween to be completely eliminated.

These size differences cause a large energy loss of light at the connecting portion. Such a large energy loss is a problem associated with conventional optical fibre connectors.

Besides the large energy loss, there is another problem that the energy loss is not a constant value but randomly-dispersed values.

The energy of light transmitting in optical fibres is dissipated at the connecting portion.
Because the energy loss is not constant, the connectors cannot be a part of accurate measuring devices, for example radiation thermometer.

The energy loss at the connecting portion causes a serious difficulty in case of high power transmission of light. The power of the light emitted from a strong CO₂ laser is very strong. Thus the energy loss at the connecting portion is also strong. The heat generated by the energy loss of laser light may well burn and subsequently impair the ends of the fibres at the connecting portion.

In case there is some size errors in the cylindrical surfaces, some clearances must exist between the sleeve and the receptacle. If not, the sleeve cannot be inserted into the receptacle. Thus some clearances is needed between the sleeve and the receptacle.

However the existance of the clearances makes the location of sleeve difficult, because the sleeve can be displaced in radial directions in of the receptacle.

When an external force acts upon a portion of the connector or the optical fibre, the sleeve can displace in a radial direction owing to the external force. The radial displacements of the sleeve change the relative positions of the fibre centres which face one another in the connector. Such a radial displacements changes the connecting loss.

This fluctuation of the connecting loss is a serious difficulty, because it is caused by external forces.

The difficulty of radial displacement of sleeve owing to the clearances cannot be solved so long as the cylindrical surface type of optical fibre connectors is employed.

Thus it may be more advantageous propective to adopt a conical surface fitting for optical fibre connectors. Here the conical surface fitting means the assembly of the receptacle with an inner conical surface and the sleeve with an outer conical surface.

So long as the apex angles of the conical surfaces are the same, the sleeve will fit well in the receptacle. If the sleeve is pushed strongly against the receptacle, no radial displacement of the sleeve will occur.

However the cutting of conical surfaces is more difficult than the cutting of the cylindrical ones. The size errors associated with the cutting of conical surfaces are considerable large.

Along a centre line of the cone, a small bore through which an optical fibre passes must be formed. However this bore is more difficult to achieve than that in a cylinder. Thus the error of the central axis of a bore in a cone is large. Furthermore all longitudinal surface lines cannot be correct straight lines. They can have concave portions and convex portions to some extent.

Therefore if a sleeve and a receptacle were conical, random radial displacement would be forbidden, but the centres of them might still deviate in a radial direction or the central axes might not be colinear but parallel.

Conical sleeves and receptacles are at present only of academic interest. The inventors know of no conical sleeve nor conical receptacle that have been manufactured.

Thus the conventional cylindrical sleeve and receptacles as well as the "imaginary conical" sleeves and receptacles have inherent drawbacks.

A purpose of the invention is to provide an optical fibre connector in which the central axes of sleeve and receptacle exactly coincide with each other.

Other purpose of the invention is to provide an optical fibre connector with low connection loss.

Another purpose of the invention is to provide an optical fibre connector in which radial displacements of sleeve are excluded.

The optical fibre connector of this invention employs both conical surfaces and cylindrical surfaces.

Accordingly the present invention provides an optical fibre connector comprising a sleeve having a central bore for an optical fibre, a front cylindrical surface and a rear conical surface formed in coaxial relation with the front cylindrical surface, and a receptacle having an inner cylindrical surface (7) of substantially the same diameter as the front cylindrical surface of the sleeve and an inner conical surface formed in coaxial relation with the inner cylindrical surface and having the same taper angle as the rear conical surface of the sleeve, characterised in that a small step is formed between the front cylindrical surface and the rear conical surface of the sleeve and a small step is formed between the inner conical surface and the inner cylindrical surface of the receptacle, and when the sleeve is fully inserted in the receptacle the cylindrical surface of the sleeve slidingly cooperates with the cylindrical surface of the receptacle to provide alignment between the sleeve and the receptacle and the conical surfaces press against one another to prevent radial displacement of the sleeve within the receptacle.

Reference should also be made to US Patent No. 4327964 (Haesly) and to the differences from the above stated invention. It should firstly be said that Haesly is not concerned with the same problem but is concerned with transmitting light signals rather than light power and for this it is not necessary to have the same alignment. In the present application the cylindrical part is critical in providing precise alignment of the fibre ends whereas in Haesly there is effectively no cylindrical part at the end to provide alignment.

While it might be said if looked at microscopically that the ferrule 18 has a small cylindrical part at its end, this does not in fact have anything to do with alignment and when it fits within the receptor of Figure 3 of the Haesley document, this cylindrical part is of smaller diameter so as to have no contact at all. This means that this minor cylindrical part (if it can be said to be cylindrical) of the ferrule 4 does not fit within its receptacle in a way which provides any alignment. Furthermore the receptacle bore has no step between the conical and cylindrical surfaces.

In the drawings:-
Figure 1 is a partially sectioned view of a receptacle and a sleeve of an embodiment of the invention in a coupled state.
Figure 2 is a sectional view of a receptacle and a sleeve of the embodiment same with Figure 1 in a decoupled state.
Figure 3 is a typical sectional view of a receptacle and a sleeve of an optical fibre connector of the invention in a decoupling state.
Figure 4 is a sectional view of a receptacle and a sleeve of a conventional optical fibre connector.

A typical optical fibre connector of this invention is shown by Figure 3.

At an end of an optical fibre (1), a sleeve (2) is fitted. The optical fibre (1) can transmit a strong infra-red light radiated from a CO₂ laser or infra-red lights radiated from an object to a radiation thermometer. The optical fibre (1) is either of thallium halide crystals, alkali halide crystals, silver halide crystals etc. The optical fibre (1) may have either a simple core structure without clad or a core-clad structure.

The sleeve (2) has a front cylindrical surface (4) at the front half and a rear conical surface (5) at the back half. Both surfaces (4) and (5) have been finished with high accuracy and are in coaxial relation.

In this respect a cylindrical surface is defined as a surface whose section are circles with a same diameter along an axial line and whose longitudinal surface lines are parallel with the axial line. Thus the axial line is a locus of the centres of the circles sectioned. A cylindrical surface has a rotational symmetry around the axial line.

A conical surface is defined as a surface whose transverse cross-section are circles with linearly-changing diameters along an axial line.

The axial line is a locus of the centres of the circles sectioned vertical to the axial line. A conical surface has a rotational symmetry around the axial line. Extensions of the longitudinal surface lines meet with together at a common point on the axial line.

In order to match the shape of the sleeve (2), a receptacle (3) has an inner conical surface (6) at an opening end and an inner cylindrical surface (7) at the middle part. The inner conical surface (6) and cylindrical surface (7) have been finished with high accuracy.

Two inner surfaces (6) and (7) are in coaxial relation.

In coupling state the front cylindrical surface (4) fits in the inner cylindrical surface (7) of the receptacle (3). At the same time the rear conical surface (5) of the sleeve (2) fits in the inner conical surface (6) of the receptacle (3).

In order to make such coupling possible, the front cylindrical surface (4) of the sleeve (2) and the inner cylindrical surface (7) of the receptacle must have nearly same diameters with slight tolerance. The surfaces (4) and (7) must be cylindrical surfaces whose longitudinal surface lines are parallel with the axial line.

In order to fit the rear conical surface (5) of the sleeve (2) with the inner conical surface (6) of the receptacle (3) without clearances, both surfaces (5) and (6) must be conical surfaces whose apex angles are common. Further it is also important to finish the conical surfaces (5) and (6) without eccentricity and perforate an optical fibre hole (8) exactly along a center line of the sleeve (2).

Besides, the longitudinal surface lines of the cones must be cut as exact straight lines all of which cross the centre axis at a common cross point.

In this example the sleeve (2) has a step (13) at the cone-cylinder boundary. The receptacle has a step (14) at the cone-cylinder boundary.

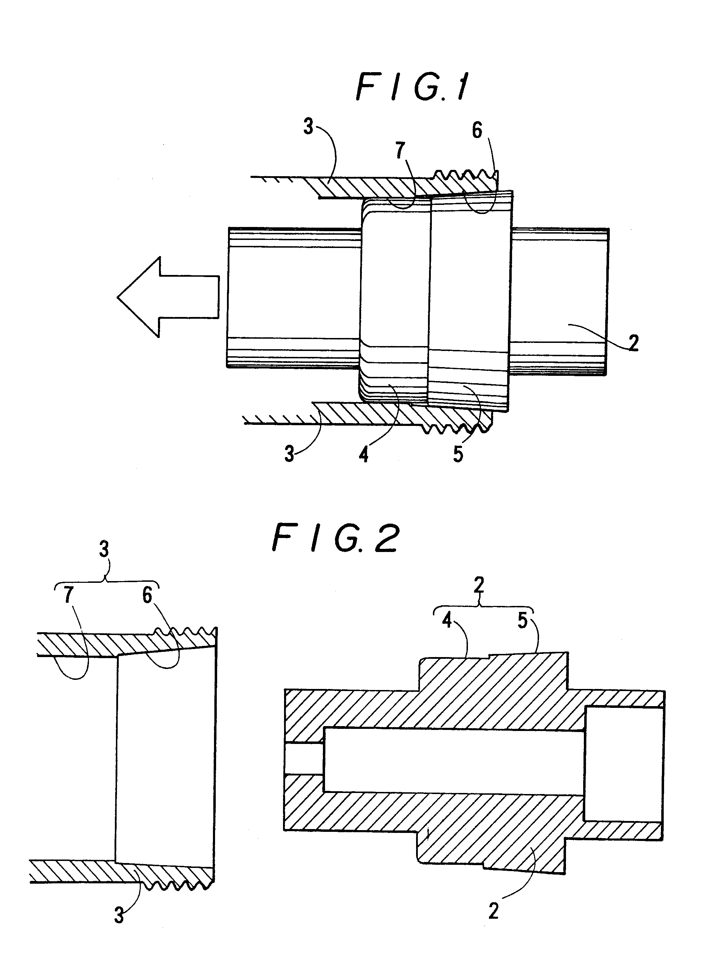

Both steps (13) and (14) cooperate to couple tightly the conical surfaces (5) and (6) in coupling state as shown in Figure 1. For this purpose the height of the step (13) of the sleeve (2) must be larger than that of the step (14) of the receptacle (3).

In usual cases the heights of the step parts (13) and (14) are less than about 1 mm.

In coupling state, if the sleeve (2) is fully pushed forward into the receptacle (3), the front cylindrical surface (4) of the sleeve (2) and the inner cylindrical surface (7) of the receptacle (3) cooperate to adjust the centre of the optical fibre with the centre of the receptacle (3). Thus the cylindrical surfaces (4) and (7) play a role of centre-adjustment.

On the other hand, the rear conical surface (5) of the sleeve (2) and the inner conical surface (6) of the receptacle (3) press each other with strong radial forces in antiparallel directions. Then the sleeve (2) does not displace in radial directions, even if external forces act upon the sleeve (2) or the optical fibre. The centre of the optical fibre does not displace in radial directions.

The conical surfaces (5) and (6) cooperate to prevent radial displacement of optical fibre.

No external shocks nor external vibrations acting on the connector can change the connection loss. The connection loss is kept to be constant by the cooperation of the conical surfaces (5) and (6).

In general in a coupling consisting of a male part and a female part, the male part has a conical front and a cylindrical rear in many cases.

But in the sleeve and the receptacle of this invention, the relation between conical surfaces and cylindrical surfaces is completely reversed.

Fig. 1 shows an embodiment of the invention in coupling state. Fig. 2 shows it in decoupling state.

The shape of front of the receptacle has many variations according to its purposes. Thus the front of the receptacle is omitted in the figures.

In this example the inner cylindrical surface (7) of the receptacle (3) is 25 mm in inner diameter. The inner conical surface (6) of the receptacle (3) is 12 mm in longitudinal length. The taper angle of the inner conical surface with regard to the axial line is 1/20. Namely half of the apex of the conical surface is 2.9 degrees (tan⁻¹0.05).

The maximum inner diameter of the cylindrical surface, that is, the inner diameter at the opening end is 26.8mm.

The tolerance of the inner cylindrical surface (25mm in diameter) of the receptacle is +0 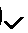 +0.05mm.

The front cylindrical surface (4) of the sleeve is 25mm in diameter. The tolerance of the diameter is -0 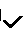 -0.05mm. The cylindrical surface (4) of the sleeve (2) is 10mm in longitudinal length.
The taper angle of the rear conical surface with regard to the axial line is 1/20.
The maximum diameter of the conical surface, that is, the diameter at the rear end of the surface is 27mm0̸.

The optical fibre connectors of this invention can be used for the optical fibre devices which transmit high power lights of CO₂ lasers or for the optical fibre devices for precise measurements.

The advantages of the invention will now be explained.

The front of the sleeve is shaped as cylindrical surface. The front cylindrical surface fits in the inner cylindrical surface of the receptacle. The cylindrical surfaces adjust the centres of the optical fibre and the receptacle with high accuracy.

The conical surfaces of the sleeve and the receptacle press each other by strong radial forces. Radial displacements of the sleeve are prevented. The centre of the sleeve does not move with regard to the receptacle.

Thus the connection loss of this optical fibre connector is low and stable. This optical fibre connector can be used to transmit a strong light radiated by a powerful CO₂ laser.

Because external forces induce no radial displacement of the sleeve, this optical fibre connector can be used as a part for precise measurements, in which the light intensity should be measured with high precision. It is because the total loss of the transmission system is stable.

The locations of the centres of the sleeve and the receptacle are precisely determined by the fittings of cylindrical surfaces.

## Claims

1. An optical fibre connector comprising a sleeve (2) having a central bore for an optical fibre, a front cylindrical surface (4) and a rear conical surface (5) formed in coaxial relation with the front cylindrical surface (4), and a receptacle (3) having an inner cylindrical surface (7) of substantially the same diameter as the front cylindrical surface (4) of the sleeve (2) and an inner conical surface (6) formed in coaxial relation with the inner cylindrical surface (7) and having the same taper angle as the rear conical surface (5) of the sleeve (2), characterised in that a small step (13) is formed between the front cylindrical surface (4) and the rear conical surface (5) of the sleeve (2) and a small step (14) is formed between the inner conical surface (6) and the inner cylindrical surface (7) of the receptacle (3), and when the sleeve is fully inserted in the receptacle the cylindrical surface (4) of the sleeve slidingly cooperates with the cylindrical surface (7) of the receptacle (3) to provide alignment between the sleeve and the receptacle and the conical surfaces press against one another to prevent radial displacement of the sleeve within the receptacle.

## Patentansprüche

1. Verbinder für optische Fasern, umfassend eine Hülse (2) mit einer zentralen Bohrung für eine optische Faser, einer vorderen zylindrischen Fläche (4) und einer hinteren konischen Fläche (5), die koaxial mit der vorderen zylindrischen Fläche (4) ausgebildet ist, und eine Aufnahme (3) mit einer inneren zylindrischen Fläche (7), die im wesentlichen den gleichen Durchmesser wie die vordere zylindrische Fläche (4) der Hülse (2) hat, und mit einer inneren konischen Fläche (6), die koaxial zur inneren zylindrischen Fläche (7) ausgebildet ist und den gleichen Kegelwinkel wie die hintere konische Fläche (5) der Hülse (2) hat, dadurch **gekennzeichnet**, daß zwischen der vorderen zylindrischen Fläche (4) und der hinteren konischen Fläche (5) der Hülse (2) eine kleine Stufe (13) ausgebildet ist, und daß zwischen der inneren konischen Fläche (6) und der inneren zylindrischen Fläche (7) der Aufnahme (3) eine kleine Stufe (14) ausgebildet ist, und daß, wenn die Hülse völlig in die Aufnahme eingeführt ist, die zylindrische Fläche (4) der Hülse gleitend mit der zylindrischen Fläche (7) der Aufnahme (3) zusammenwirkt, um ein Ausrichten zwischen der Hülse und der Aufnahme zu schaffen und um die konischen Flächen gegeneinander zu drücken, um eine radiale Verschiebung der Hülse in der Aufnahme zu verhindern.

## Revendications

1. Connecteur pour fibre optique comprenant un manchon (2) muni d'un trou central pour passer une fibre optique, une surface cylindrique avant (4) et une surface conique arrière (5) coaxiale à la surface cylindrique avant (4), et un réceptacle (3) avec une surface cylindrique intérieure (7) ayant sensiblement le même diamètre que la surface cylindrique avant (4) du manchon (2) et une surface intérieure conique (6) coaxiale à la surface intérieure cylindrique (7) et ayant le même angle de conicité que la surface conique arrière (5) du manchon (2), caractérisé en ce qu'un petit épaulement (13) est formé entre la surface cylindrique avant (4) et la surface conique arrière (5) du manchon (2), et qu'un petit épaulement (14) est formé entre la surface conique intérieure (6) et la surface cylindrique intérieure (7) du réceptacle (3), et que, lorsque le manchon est complètement inséré dans le réceptacle, la surface cylindrique (4) du manchon s'adapte par glissement sur la surface cylindrique (7) du réceptacle (3) pour donner un alignement entre le manchon et le réceptacle, et que les surfaces coniques sont pressées l'une contre l'autre pour empêcher le déplacement radial du manchon dans le réceptacle.
